# EUROPÄISCHE PATENTSCHRIFT

(11) **EP 3 034 231 B1**
(45) Veröffentlichungstag und Bekanntmachung des Hinweises auf die Patenterteilung: **27.06.2018**
(21) Anmeldenummer: 15000700.3
(22) Anmeldetag: 10.03.2015
(51) Int. Cl.: B23K 35/38, B01F 3/02, F17C 1/00

(54) **VERFAHREN ZUM LICHTBOGENFÜGEN ODER ZUR MATERIALBEARBEITUNG MIT REDUZIERTEM SCHADSTOFFAUSSTOß**
METHOD FOR ARC WELDING OR FOR PROCESSING MATERIAL WITH REDUCED EMISSION OF HAZARDOUS SUBSTANCES
PROCÉDÉ DESTINÉ À LA RÉALISATION D'UN ARC ÉLECTRIQUE OU À LA PRÉPARATION DE MATÉRIAU À ÉMISSION RÉDUITE DE SUBSTANCES NOCIVES

(30) Priorität: 17.12.2014 DE 102014018884
(43) Veröffentlichungstag der Anmeldung: 22.06.2016
(73) Patentinhaber: Linde Aktiengesellschaft, 80331 München (DE)
(72) Erfinder: Miklos, Ernst, 85551 Kirchheim (DE); Bayerl, Wilhelm, 82054 Sauerlach (DE)
(74) Vertreter: Fischer, Werner

(56) Entgegenhaltungen:
- CH-A- 387 218
- DE-A1- 19 748 212
- JP-A- S62 252 686
- US-A- 3 470 346
- Lun Pan, Erjiang Hu, Jiaxiang Zhang, Zihang Zhang, Zuohua Huang: "Experimental and kinetic study on ignition delay times of DME/H2/O2/Ar mixtures", Combustion and Flame, vol. 161, no. 3 7 November 2013 (2013-11-07), March 2014 (2014-03), pages 735-747, DOI: https://doi.org/10.1016/j.combustflame.201 3.10.015 Retrieved from the Internet: URL:http://www.sciencedirect.com/science/a rticle/pii/S0010218013003891 [retrieved on 2017-05-30]

## Beschreibung

Die Erfindung betrifft ein Verfahren für thermisches Spritzen, Schneiden, Fügen, Auftragschweißen und/oder die Oberflächenbehandlung mittels Lichtbogen, Plasma und/oder Laser, welches ein Gasgemisch verwendet.

Es ist bekannt, dem Schutzgas reaktive gas-oder dampfförmige Substanzen zusetzten um verschiedene Eigenschaften beim Schweißen und im Schweißgut zu verbessern. Die US 3,470,346 beschreibt unter anderem den Zusatz von Alkohol zu einem Schutzgasgemisch aus Argon und Helium.

Die DE19748212 offenbart eine Zugabe von Odorierungsmitteln zu Inertgasen oder Schutzgasen. Bei dem Odoriermittel handelt es sich in der Regel um Schwefelverbindungen (als Beispiel werden unter anderem Alkandisulfide; i.e. Thioether; genannt). Die Zugabe von Odorierungsmitteln soll bei Leckagen die Gase wahrnehmbar machen. Der Erfindung liegt die Aufgabe zugrunde, qualitativ hochwertige Fügeverbindungen möglich zu machen und das thermische Spritzen, Schneiden, Fügen, Auftragschweißen und/oder die Oberflächenbehandlung mittels Lichtbogen, Plasma und/oder mittels Laser zu verbessern.

Es wurde überraschend gefunden, dass der Zusatz eines Ethers oder eines eine Ethergruppe enthaltenden cyclischen Amins zu üblichen Schutzgasen, wie Argon, Helium, Stickstoff, Kohlendioxid oder Wasserstoff oder deren Gemischen zu einer erheblichen Zunahme des Wirkungsgrades des thermischen Spritzens, Schneidens, Fügens, Auftragschweißens und/oder der Oberflächenbehandlung mittels Lichtbogen, Plasma und/oder mittels Laser und zum Erhalt qualitativ hochwertiger Schweißnähte und Lötnähte von feinkörniger Beschaffenheit führt.

Demgemäß betrifft die Erfindung die Verwendung eines Gasgemisches zur industriellen Bearbeitung, wobei das Gasgemisch ein Schutzgas umfasst, welches Kohlendioxid und/oder Sauerstoff und/oder Wasserstoff und/oder Stickstoff sowie zumindest eine inerte Komponente ausgewählt aus der Gruppe von Argon, Helium, Argon-Helium-Gemischen und anderen Edelgasen und deren Gemische sowie Gemische von anderen Edelgasen mit Argon und/oder Helium aufweist und einen Schutzgaszusatz, der aus der Gruppe von Ether oder mindestens eine Ethergruppe enthaltenden cyclischen Aminen oder Mischungen davon ausgewählt ist, wobei das Gasgemisch im Bereich von 0,0001 Vol.-% (1 vpm) bis 10 Vol.-% Schutzgaszusatz, bezogen auf das Gasgemisch, enthält. Bei dem erfindungsgemäßen Verfahren zur industriellen Bearbeitung, wird mit Hilfe des oben erwähnten Gasgemisches ein thermisches Spritzen, Schneiden, Fügen, Auftragschweißen und/oder eine Oberflächenbehandlung mittels Lichtbogen, Plasma und/oder Laser vorgenommen. Eine Vorrichtung zum Bereitstellen des Gasgemisches, Umfasst einen Tank mit flüssigem Argon, Stickstoff, Kohlendioxid, Wasserstoff oder Helium oder deren Mischungen und/oder einen oder mehrere Druckbehälter mit Argon, Stickstoff, Kohlendioxid, Wasserstoff oder Helium oder deren Mischungen, einen Behälter, der den Schutzgaszusatz gegebenenfalls in einem Lösungsmittel gelöst enthält, und eine Leitung die Argon, Stickstoff, Kohlendioxid, Wasserstoff oder Helium oder deren Mischungen in den Gasraum des Behälters einleitet oder durch die Flüssigkeit in dem Behälter hindurch leitet und das entstandene Gasgemisch bis zu einem Verbraucher weiterleitet. Die Herstellung des Gasgemisches erfolgt dadurch, dass ein Schutzgaszusatz zusammen mit Argon, Stickstoff, Kohlendioxid, Wasserstoff oder Helium oder deren Mischungen in einen Druckbehälter abgefüllt wird.

Das Schutzgas ist gewöhnlich aus Ar, He, CO₂, H₂, N₂ oder Luft oder deren Gemischen ausgewählt. Ar und Gemische aus Ar und He, Ar und CO₂, Ar und N₂, Ar und H₂ sowie die drei letztgenannten Gemische, die ferner He enthalten, sind besonders bevorzugt. Kohlendioxid und Wasserstoff werden bevorzugt in Mischung mit Ar, He, N₂, Luft oder deren Mischung eingesetzt. Kohlendioxid liegt dabei in Mengen von gewöhnlich 1 bis 80 Vol.-%, bevorzugt 2 bis 50 Vol.-%, besonders bevorzugt 5 bis 20 Vol.-% vor. Ferner kann auch Sauerstoff auch in Mengen von gewöhnlich 1 bis 30 Vol.-%, bevorzugt 2 bis 20 Vol.-% beigemischt sein. In diesem Fall wird Sauerstoff vor Ort drucklos zugegeben.

Kohlendioxid, Wasserstoff und Sauerstoff können auch in Dotiermengen von 10 vpm bis 10000 vpm (0,001 bis 1,0 Vol.-%), bevorzugt 100 bis 1000 vpm, beigemischt sein. Dies gilt auch für Stickstoffmonoxid und Lachgas (N₂O).

Die Ether können aus allen geradkettigen oder verzweigten aliphatischen, cycloaliphatischen oder aromatischen Ether oder stickstoffhaltigen Heteroether mit einem Schmelzpunkt von ≤ 5 °C ausgewählt sein.

Die gasförmigen Kohlenwasserstoffe machen 0,0001 Vol-% (1 vpm) bis 10 Vol.-%, bevorzugt im Bereich von 0,001 Vol-% (10 vpm) bis 5 Vol.-%, besonders bevorzugt im Bereich von 0,01 Vol-% (100 vpm) bis 0,1 Vol.-% (1000vpm), besonders bevorzugt im Bereich von 0,0001 Vol.-% (1 vpm) bis kleiner 0,1 Vol.-% (1000 vpm) Schutzgaszusatz, bezogen auf das erfindungsgemäße Gasgemisch, aus. Die in einem speziellen Fall verwendeten Mengen hängen von der Art des Verfahrens und von den verarbeiteten Werkstoffen ab.

Dimethylether und Ethylmethylether sind bei Raumtemperatur gasförmig und können auf einfache Weise mit dem Schutzgas gemischt werden. Sie sind deshalb bevorzugt.

Der Bezeichnung Ether bezieht sich auf Ether mit einer einzigen Ethergruppe sowie auf Ether mit zwei oder mehr Ethergruppen.

Die höheren Ether und ab Diethylether, der ebenfalls bevorzugt ist, und stickstoffhaltige Heteroether mit einem Schmelzpunkt ≤ 5 °C sind bei Raumtemperatur flüssig.

Neben den geradkettigen aliphatischen Ethern, wie Dimethylether, Ethylmetylether, Diethylether, Ethylpropylether, Dipropylether, Dimethoxyetan und höheren geradkettigen Ethern, können auch verzweigte Ether, wie Diisopropylether und Diisobutylether, und cyclische Ether, wie Terahydrofuran, Tetrahydropyran und 1,4-Dioxan, eingesetzt werden.

Zu den einsetzbaren aromatischen Ethern zählt zum Beispiel Anisol. Ein Beispiel für ein eine Ethergruppe enthaltendes cyclisches Amin ist Morpholin.

Aus Gründen der Einfachheit werden im Folgenden die eine Ethergruppe enthaltenden cyclischen Amine ebenfalls als Ether bezeichnet. Zur besseren Lesbarkeit soll im Folgenden die Formulierung " wenn dem Schutzgas ein Ether, insbesondere Dimethylether, Ethylmethylether und/oder Diethylether, zugesetzt wird", die eigentlich die Ausgestaltung der vorliegenden Erfindung gemäß Anspruch 3 wiedergibt, auch die allgemeinere, doch sprachlich sperrigere Formulierung aus Anspruch 1, wonach der "Schutzgaszusatz, der aus der Gruppe von Ether, mindestens eine Ethergruppe enthaltenden cyclischen Aminen und Mischungen davon ausgewählt ist" mit umfassen. Dies trifft besonders auf die Stellen im Text zu, an denen von den überraschenden Versuchsergebnissen berichtet wird.

Der Vorteil von Ether-Schutzgaszusätzen gegenüber Alkohol-Schutzgaszusätzen besteht darin, dass die erstgenannten Zusätze bei ähnlichem Molekulargewicht eine niedrigeren Schmelzpunkt und Siedepunkt aufweisen.

Das Schutzgas mit einem bei Raumtemperatur flüssigen Ether-Zusatz wird in einer vorteilhaften Ausgestaltung bereitgestellt, indem man zumindest eine Komponente des Schutzgases durch eine Bereitstellungsflüssigkeit strömen lässt, die aus dem Ether-Schutzgaszusatz besteht. Es ist jedoch auch möglich, diese Bereitstellung für bei Umgebungstemperatur gasförmige Ether zu verwenden, indem der Ether-Schutzgaszusatz gekühlt wird, so dass er in flüssiger Form vorliegt. Auch bei leicht flüchtigen Verbindungen wie Diethylether wird eine leichte Kühlung von Vorteil sein. Es ist auch möglich, den Ether-Schutzgaszusatz in einem Lösungsmittel, das einen niedrigeren Dampfdruck aufweist als der Ether, beispielsweise in höheren Kohlenwasserstoffen oder Wasser, zu lösen und diese Lösung als Bereitstellungsflüssigkeit zu verwenden. In diese Bereitstellungsflüssigkeit wird nun zumindest eine Komponente des Schutzgases geleitet. Vorteilhafterweise wird Argon, Kohlendioxid oder Helium eingeleitet, aber auch die anderen möglichen Komponenten oder eine Mischung daraus können in die Bereitstellungsflüssigkeit geleitet werden. Beim Strömen durch die Bereitstellungsflüssigkeit nimmt das Gas den Ether-Schutzgaszusatz auf und es entsteht ein Gasgemisch, welches direkt oder nach einem Mischen mit weiteren Komponenten oder auch nach einem Verdünnen den Ether-Schutzgaszusatz in der gewünschten Konzentration enthält und nun als Schutzgas mit Ether-Zusatz für das thermische Spritzen, Schneiden, Fügen, Auftragschweißen und/oder die Oberflächenbehandlung mittels Lichtbogen, Plasma und/oder mittels Laser verwendet wird.

Um eine bestimmte Konzentration reproduzierbar und zuverlässig einstellen zu können, wird die Bereitstellungsflüssigkeit vorteilhafterweise thermostatisiert. Dadurch, dass die Bereitstellungsflüssigkeit auf konstanter Temperatur gehalten wird, ist eine gleich bleibende Konzentration der Ether in dem Gas gewährleistet. Da die Konzentration, mit der die Ether in dem Gas nach der Anreicherung vorliegt, von der Temperatur abhängt, ist es möglich, durch die Thermostatisierung die Konzentration der Ether in dem Gas einzustellen. Bei der Thermostatisierung kann sowohl eine Temperaturwahl oberhalb als auch unterhalb der Umgebungstemperatur von Vorteil sein. So ist es insbesondere bei sehr leicht flüchtigen Ethern oder bei Ehern mit Siedepunkten nahe der Umgebungstemperatur von Vorteil, wenn eine Temperatur unterhalb der Umgebungstemperatur gewählt wird, während bei höher siedenden Ethern eine Temperatur oberhalb der Umgebungstemperatur von Vorteil sein kann, damit genügend Teilchen in das Gas übergehen. Folglich ist es möglich, mittels der Thermostatisierung über die Wahl der Temperatur die Konzentration der Ether in dem Gas einzustellen.

Gemäß einer alternativen, vorteilhaften Ausführung des erfindungsgemäßen Verfahrens wird der Ether-Schutzgaszusatz als Gas mit der oder den weiteren Komponenten zur Schweißschutzgasmischung vermischt. Dazu wird, sofern notwendig, der Ether-Schutzgaszusatz durch Erwärmen in die Gasphase überführt. Liegt der Ether-Schutzgaszusatz bereits gasförmig vor, entfällt die Erwärmung. Der gasförmige Ether-Schutzgaszusatz wird mit der oder den weiteren Komponenten zur fertigen Schutzgasmischung mit Ether-Zusatz vermischt. Diese Methode empfiehlt sich insbesondere für Ether-Schutzgaszusätze, die bei Umgebungstemperatur bereits gasförmig vorliegen oder die einen Siedepunkt nahe der Umgebungstemperatur aufweisen.

In beiden Fällen ist es möglich, entweder den Ether-Schutzgaszusatz der einzigen weitern Komponenten beziehungsweise der ansonsten fertigen Schutzgasmischung zu vermengen oder zuerst den Ether-Schutzgaszusatz nur mit einer Komponente zu vermengen und anschließend zu verdünnen beziehungsweise die übrigen Komponenten zuzugeben.

Neben diesen beiden bevorzugten Bereitstellungsmethoden ist es beispielsweise auch möglich, Dampf über einer Bereitstellungsflüssigkeit zu entnehmen oder den flüssigen Ether-Schutzgaszusatz mit einer weiteren flüssig vorliegenden Komponente des Schutzgases, beispielsweise mit flüssigem Argon oder flüssigem Kohlendioxid, zu vermischen, um das Schutzgas zu erhalten. Hierbei ist jedoch die Einstellung der Konzentration des Ether-Schutzgaszusatzes im Schutzgas meist schwieriger.

In vorteilhafter Ausgestaltung der Erfindung wird das Schutzgas vor Ort hergestellt. Bei einer Herstellung vor Ort können die Komponenten des Schutzgases gasförmig oder flüssig vom Gaslieferanten bereitgestellt werden. Möglich ist aber auch eine Abfüllung der fertigen Schutzgasmischung in Gasflaschen beim Gashersteller mit anschließender Lieferung.

Beim thermischen Spritzen, Schneiden, Fügen, Auftragschweißen und/oder bei der Oberflächenbehandlung mittels Lichtbogen, Plasma und/oder Laser (ein Plasma entsteht auch im Lichtbogen und gewöhnlich auch im Laser) ist es die Aufgabe des Plasmas, auf kontrollierte Weise Wärme auf den Werkstoff zu übertragen. Da die Theorie von Plasmen außerordentlich schwierig ist, sind die genauen Vorgänge in den bei den genannten Verfahren erzeugten Plasmen nicht gut bekannt und schwer vorherzusagen.

Ohne durch eine Theorie gebunden zu sein, nimmt man an, dass bei Edelgasplasmen Wärme dadurch erzeugt wird, dass einerseits Elektronen und positiv geladene Ionen zu Atomen rekombinieren und andererseits die Atome Energie durch Stoß abgeben.

Bei Plasmen, an denen H₂- der N₂-Moleküle beteiligt sind, wird angenommen, dass weiter Energie aus der Vereinigung von Atomen zu Molekülen freigesetzt werden kann.

Es wurde überraschend gefunden, dass die erfindungsgemäß eingesetzten Ether-Schutzgaszusätze insbesondere die Energie der Gasgemische erhöhen.

Wie groß dabei der jeweilige Energieanteil ist, der zur Erwärmung des Werkstoffs führt, hängt von den speziellen Bedingungen des Plasmas ab und ist schwer vorherzusagen.

Die Dotierung von Gasgemischen mit geringen Mengen CO₂, NO, N₂O und O₂ insbesondere beim Lichtbogenfügen ist bekannt (siehe z.B. EP 0 544 187 B2, EP 0 639 423 B1 und EP 0 640 431 B1). Durch sie wird u.a. eine Stabilisierung des Lichtbogens, eine bessere Energieeinkopplung beim Laser und allgemein eine Qualitätsverbesserung bewirkt. Dies wird überraschend auch bei Vorliegen geringer Mengen des erfindungsgemäß eingesetzten Ether-Schutzgaszusatzes beobachtet.

Zum Laserbearbeiten werden beispielsweise CO₂-, Nd-YAG-, Dioden-, Scheiben- oder Faserlaser verwendet.

Die thermischen Spritzverfahren, bei dem die erfindungsgemäßen Gasgemische eingesetzt werden, gliedern sich in Lichtbogenspritzen, Plasmaspritzen und Laserspritzen.

Beim Lichtbogenspritzen werden zwei drahtförmige, elektrisch leitende Spritzwerkstoffe kontinuierlich unter einem bestimmten Winkel aufeinander zugeführt. Zwischen den Spritzdrähten (Elektroden) brennt nach dem Zünden ein Lichtbogen mit einer hohen Temperatur und schmilzt den Spritzwerkstoff ab. Ein starker Gasstrom zerstäubt das Schmelzgut und beschleunigt die Spritzpartikel auf die Werkstückoberfläche hin, wo sie eine Beschichtung bilden. Verfahrensbedingt können nur metallisch leitende, drahtförmige Spritzwerkstoffe verarbeitet werden. Luft kann als Zerstäubergas verwendet werden, aber die Verwendung von Stickstoff und/oder Argon ist üblich.

Im Lichtbogenverfahren aufgetragene Schichten zeichnen sich durch eine sehr gute Haftung aus. Die Spritzpartikel verklammern mit dem Grundwerkstoff. Das Verfahren eignet sich besonders für Anwendungen, die dicke Beschichtungen erfordern oder große Oberflächen betreffen.

Die aufgetragenen Schichten können z.B. zur Isolation, zum Verschleißschutz und zur Gleitlagerung dienen.

Es hat sich nun überraschend herausgestellt, dass die Spritzgeschwindigkeit weiter erhöht werden kann, wenn dem Zerstäubergas Ether, insbesondere Dimethylether, Ethylmethylether und/oder Diethylether, zugesetzt werden, oder die Auftragsrate gesteigert wird, also dickere Schichten abgeschieden werden können. Die Qualität der Beschichtung wird ebenfalls verbessert.

Das Plasmaspritzen ist ein weiteres thermisches Spritzverfahren. Bei diesem Verfahren sind in einem Plasmabrenner eine Anode und bis zu drei Kathoden durch einen schmalen Spalt getrennt. Durch eine Gleichspannung wird ein Lichtbogen zwischen Anode und Kathode erzeugt. Das durch den Plasmabrenner strömende Gas oder Gasgemisch wird durch den Lichtbogen geleitet, hierbei dissoziiert und ionisiert. Die Dissoziation und Ionisation erzeugen ein hochaufgeheiztes, elektrisch leitendes Plasma (Gas aus positiven Ionen und Elektronen). In diesen Plasmastrahl wird durch eine Düse Pulver eingetragen, das durch die hohe Plasmatemperatur angeschmolzen wird. Der Pozessgasstrom (Plasmagasstrom) reißt die Pulverteilchen mit und schleudert sie auf das zu beschichtende Werkstück. Durch die extrem hohe Temperatur (bis 30.000 °C) können nahezu alle Werkstoffe, auch hochschmelzende (z.B. Keramik), verarbeitet werden.

Bei Plasmaspritzschichten kann es sich z.B. um sehr harte, verschleißfeste, nahezu dichte Schichten mit sehr guter chemischer Beständigkeit handeln.

Das Gasgemisch bei der Plasmabeschichtung kann gleichzeitig als Transportgas und als Schutzgas dienen. Verwendete Gase sind in der Regel Argon, Stickstoff, Wasserstoff oder Helium und deren Gemische.

Es hat sich nun überraschend herausgestellt, dass durch den Zusatz von Ethern, insbesondere Dimethylether, Ethylmethylether und/oder Diethylether, zu dem oder den Gasgemisch(en) die Spritzgeschwindigkeit erhöht werden kann oder die Auftragsrate gesteigert wird, also dickere Schichten abgeschieden werden können. Die Qualität der Beschichtung wird ebenfalls verbessert. Durch die Zugabe von Ethern, insbesondere Dimethylether, kann bei Beschichtungen auch der Kohlenstoffgehalt positiv beeinflusst werden, was wiederum die Eigenschaften des Schichtwerkstoffes bzw. der aufgespritzten Schicht bezüglich mechanischer und tribologischer Hinsicht verbessert.

Das Laserspritzen ist ein weiteres thermisches Spritzverfahren. Beim Laserspritzen wird ein pulverförmig vorliegender Spritzzusatz über eine Düse in den auf das Werkstück fokussierten Laserstrahl eingebracht und mit Hilfe eines Gases auf die Werkstoffoberfläche geschleudert. Im Brennfleck des Lasers entsteht ein Plasma, durch das sowohl das Pulver als auch ein minimaler Teil der Werkstoffoberfläche aufgeschmolzen werden und der zugeführte Spritzzusatz metallurgisch mit dem Werkstoff verbunden wird.

Es hat sich nun überraschend herausgestellt, dass durch den Zusatz von Ethern, insbesondere Dimethylether, Ethylmethylether und/oder Diethylether, zum Gasgemisch wie bei den vorstehenden thermischen Spritzverfahren die Spritzgeschwindigkeit erhöht werden kann oder die Auftragsrate gesteigert wird, also dickere Schichten abgeschieden werden können, und die Qualität der Beschichtung ebenfalls verbessert wird.

Mit thermischem Trennen oder Schneiden sind hier das Plasmaschneiden und das Laserstrahlschneiden gemeint.

Das Plasmaschneiden ist ein Prozess des thermischen Trennens, bei welchem der Grundwerkstoff durch den Plasmalichtbogen geschmolzen und/oder verdampft und teilweise auch verbrannt wird. Als Plasmalichtbogen bezeichnet man einen durch eine gekühlte Düse eingeschnürten ionisierten und dissoziierten Gasstrahl. Durch die Einschnürung erhält man einen Plasmastrahl mit hoher Energiedichte. Das Grundmaterial tritt mit dem Plasmastrahl in Wechselwirkung und wird durch das Plasmagas aus der entstehenden Schnittfuge ausgetrieben. Die zur Einschnürung notwendige Kühlung der Düse erfolgt üblicherweise entweder mittels Wasser und/oder mittels eines Gasgemisches, das als Sekundärgas, Schutzgas oder Hüllgas bezeichnet wird, welches den Plasmastrahl umhüllt. Eine Variante des Plasmaschneidens ist das Feinstrahl-Plasmaschneiden, bei welchem der Plasmastrahl sehr stark eingeschnürt wird. Das schmelzflüssige Material wird durch die hohe kinetische Energie des das Plasma bildenden Gasgemisches (auch als Plasmagas bezeichnet) ausgetrieben. Bei Verwendung eines Gasgemisches, das als Sekundärgas oder Schutzgas dient, bläst auch dieses das flüssige Material aus. Als Gasgemische für die Erzeugung des Plasmas werden Argon, Stickstoff, Wasserstoff und manchmal auch Helium sowie deren Mischungen eingesetzt. Diesem Gasgemisch wird in manchen Fällen auch Sauerstoff zugegeben, wobei der Sauerstoff zu einer Oxidationsreaktion mit dem Werkstoff führen kann und dadurch zusätzliche Energie einbringt. Auch mit Druckluft als Gas wird gearbeitet. Bisweilen wird auch Kohlendioxid zugegeben. Wird ein weiteres Gasgemisch, d.h. ein Sekundärgas verwendet, wird auch für dieses ein Gas oder eine Gasmischung aus den eben genannten Gasen eingesetzt. Die Wahl des Gases beziehungsweise der Gaszusammensetzung wird durch die Verfahrensvariante und vor allem durch Dicke und Art des zu schneidenden Werkstoffes bestimmt.

Es hat sich nun herausgestellt, dass in den Fällen, in denen einem der oben genannten Gasgemische (Plasmagas, Sekundärgas) aus Argon, Helium, Stickstoff oder Wasserstoff oder einer Mischung davon weiter ein Ether, insbesondere Dimethylether, Ethylmethylether und/oder Diethylether, zugesetzt wird, die Schneidgeschwindigkeit wesentlich erhöht werden kann. Weiter wird die Qualität der Schnittfuge verbessert.

Beim Laserstrahlschneiden wird ein Laserstrahl als Schneidwerkzeug benutzt. Dazu wird der Laserstrahl auf die Bearbeitungsstelle gelenkt. Beim Laserschneiden mit inerten oder reaktionsträgen Gasen als Schneidgasen findet keine oder nahezu keine chemische Reaktion mit dem Grundwerkstoff statt. Das geschmolzene Material wird beim Laserstrahlschneiden mit dem Schneidgas aus der Schnittfuge ausgetrieben. Als Schneidgas wird folglich meist Stickstoff, Argon und/oder Helium verwendet. Auch Druckluft wird eingesetzt. Der Laserstrahl ist ein ideales Werkzeug, um metallische und nichtmetallische Werkstoffe geringer Dicken zu schneiden. Mit zunehmender Werkstoffdicke nimmt die Schneidgeschwindigkeit des Laserstrahls jedoch stark ab.

Überraschend wurde nun gefunden, dass sich ein zugesetzter Ether, insbesondere Dimethylether, Ethylmethylether und/oder Diethylether, in der Schneidfuge zersetzt und dadurch mehr Energie in die Fuge einbringt. Als Folge wird die Schneidgeschwindigkeit des Laserstrahls bedeutend erhöht. Weiterhin ist es auch möglich, dickere Werkstoffe mit wirtschaftlich zufriedenstellenden Schneidgeschwindigkeiten zu trennen. Die Beschaffenheit der Schnittfuge wird ebenfalls verbessert und auch die Notwendigkeit zur Nachbearbeitung sinkt. Es steigt also die Produktivität.

Schweißen zum stoffsschlüssigen Verbinden von metallischen Werkstücken wird seit langem durchgeführt. Beim Schweißen werden die zu verbindenden Werkstücke aufgeschmolzen. Beim Metall-Schutzgas-Schweißen brennt ein Lichtbogen in einem Schutzgasmantel. Zum Lichtbogen-Schweißen mit abschmelzender Elektrode zählen das Metall-Inertgas-Schweißen (MIG-Schweißen) und das Metall-Aktivgas-Schweißen (MAG-Schweißen) sowie mit nicht abschmelzender Elektrode das Wolfram-Inertgas-Schweißen (WIG-Schweißen). Ferner stellt das Wolfram-Plasma-Schweißen (WP-Schweißen) eine zusätzliche Verfahrensvariante des Lichtbogen-Schweißens unter Schutzgas mit nicht abschmelzender Elektrode dar. Es sind auch Hybridverfahren und Schweißen mit mehreren Elektroden, und insbesondere das Tandemschweißen bekannt. Schutzgasmischungen zum Schweißen mit Lichtbogen existieren in zahlreichen verschiedenen Mischungen, wobei die einzelnen Mischungen für das jeweilige Schweißverfahren und den Werkstoff optimiert sind. Geachtet wird hierbei auf einen stabilen Lichtbogen, eine qualitativ hochwertige Schweißnaht, auf das Vermeiden von Poren und Schweißspritzern und eine hohe Verarbeitungsgeschwindigkeit. Die üblichsten Schutzgase sind Argon, Helium, Stickstoff und Wasserstoff sowie deren Mischungen.

Als Löten wird ein thermisches Verfahren zum stoffschlüssigen Fügen von Werkstoffen bezeichnet, bei dem eine flüssige Phase durch Schmelzen eines Lotes (Lot-Zusatzwerkstoff) entsteht. Beim Löten wird im Gegensatz zum Schweißen die Solidustemperatur der zu verbindenden Werkstücke nicht erreicht. Zu nennen sind hierzu die verschiedenen Lichtbogen-Lot-Verfahren MIG, MAG, WIG sowie das Plasma- und das Plasma-MIG-Löten und hybride Lötverfahren. Bei den Hartlötverfahren, welche mit Lichtbogen und unter Schutzgas arbeiten, wird die Lötverbindung in der Regel unter Einsatz von Schutzgasschweißgeräten hergestellt. Dabei wird jedoch nicht der Grundwerkstoff aufgeschmolzen, sondern nur die sogenannten Hart- bzw. Hochtemperaturlote, welche als Zusatzwerkstoffe verwendet werden. Die eingesetzten Lotwerkstoffe besitzen verhältnismäßig niedrige Schmelzpunkte in der Größenordnung von etwa 1000°C. Als Lotwerkstoffe werden häufig Bronzedrähte eingesetzt, welche aus Kupferbasislegierungen mit unterschiedlichen Legierungselementen wie Aluminium, Silicium oder Zinn bestehen. Die verwendeten Schutzgase sind die gleichen wie beim Lichtbogenschweißen.

Mit Hilfe des Lötens können auch Verbindungen aus unterschiedlichen artverschiedenen Materialien hergestellt werden, wobei auch hier die vorgenannten Vorteile des Lötens gelten. Bei artverschiedenen Werkstoffen ist auch eine Mischform aus Schweißen und Löten möglich, bei welcher das Schmelzbad aus dem Material mit niedrigerem Schmelzpunkt und Lot-Zusatzwerkstoff gebildet wird und das Material mit dem höheren Schmelzpunkt lediglich erwärmt, nicht jedoch geschmolzen wird.

Es wurde nun überraschend gefunden, dass sich die Fügegeschwindigkeit und Qualität der Schweiß- bzw. Lötnaht erheblich verbessern lassen, wenn dem Schutzgas ein Ether, insbesondere Dimethylether, Ethylmethylether und/oder Diethylether, zugesetzt wird. Ferner wird der Energieeintrag in das Schweißbad/Lotbad durch den Ether verbessert.

Beim Plasmafügen (-schweißen und -löten) dient ein Plasmastrahl als Wärmequelle. Der Plasmastrahl wird durch Ionisation und Einschnüren eines Lichtbogens erzeugt. Dieser brennt zwischen einer nichtabschmelzenden negativen (Wolfram-)Elektrode und dem Werkstück als sog. Hauptlichtbogen (direkt übertragener Lichtbogen). Zusätzlich kann für den Zündvorgang zwischen einer nichtabschmelzenden negativen (Wolfram-)Elektrode und einer als Düse ausgebildeten Anode ein Pilotlichtbogen eingesetzt werden. Der für das Schweißen verwendete sogenannte Hauptlichtbogen (Plasmastrahl) kann z.B. entlang eines gewünschten Schweißnahtverlaufs bewegt werden. Durch einen Plasmabrenner werden bis zu drei Gase oder Gasgemische zugeführt, nämlich das sogenannte Plasmagas, gegebenenfalls ein sogenanntes Sekundärgas oder Fokussiergas zum Einschnüren des Plasmastrahls und das sogenannte Schutzgas, das als Schutzgasmantel den Plasmastrahl bzw. Plasmastrahl und Sekundärgas umgibt.

Das Plasma-Stichlochschweißen stellt eine Variante des Plasmaschweißens dar. Das Plasma-Stichlochschweißen wird bei dünneren Blechen eingesetzt. Dieses Verfahren findet hauptsächlich Anwendung im Behälter- und Apparatebau und im Rohrleitungsbau.

Beim Plasma-Stichlochschweißen durchstößt der Plasmastrahl zu Beginn des Schweißvorgangs die gesamte Werkstückdicke. Dabei wird das durch Aufschmelzen des Werkstücks entstehende Schmelzbad vom Plasmastrahl zur Seite gedrückt. Die Oberflächenspannung der Schmelze verhindert ein Durchfallen durch das Stichloch. Stattdessen fließt die Schmelze hinter der sich bildenden Schweißöse wieder zusammen und erstarrt zur Schweißnaht.

Das Mikroplasma-Schweißen wird insbesondere für dünne und dünnste Blechdicken eingesetzt.

Es wurde nun überraschend gefunden, dass der Zusatz eines Ethers zu einem oder mehreren der genannten Gasgemische (Plasma- und/oder Sekundär- und/oder Schutzgas) zu einer bemerkenswerten Erhöhung der Schweiß-/Lötgeschwindigkeit wie auch zur Verbesserung der Schweiß-/Lötnaht führt.

Überraschenderweise hat sich auch gezeigt, dass Ether und insbesondere Dimethylether, Ethylmethylether und/oder Diethylether bereits in kleinen Mengen, die im Bereich von etwa 10 vpm bis etwa 5000 vpm, bevorzugt etwa100 vpm bis etwa 1000 vpm liegen, die erfinderischen Vorteile zeigen und dass insbesondere beim Lichtbogenfügen, aber auch beim Plasmafügen ein stabilerer Prozess erreicht wird und höhere Fügegeschwindigkeiten möglich werden.

Es gibt kombinierte Lichtbogen-/Laserfügeverfahren, sogenannte Hybridverfahren. Auch hier ist der Zusatz eines Ethers, insbesondere von Dimethylether, Ethylmethylether und/oder Diethylether, vorteilhaft.

Beim Auftragschweißen wird ein Beschichtungsmaterial auf einen Werkstoff aufgeschweißt.

Zur Oberflächenbehandlung gehört die Oberflächenbehandlung mit Plasma, wie Oberflächenaktivierung, Oberflächenvorbehandlung, Oberflächenbehandlung, Funktionalisieren der Oberfläche und auch die Oberflächenreinigung. Bei dem Plasma kann es sich um ein offenes Plasma wie in einem WIG-Brenner, um ein eingeschnürtes Plasma wie in einem Plasmabrenner oder um ein Plasma in einer Plasmakammer handeln.

Auch in diesen beiden letztgenannten Verfahren wird die Effizienz durch Zusatz eines Ethers, insbesondere von Dimethylether, Ethylmethylether und/oder Diethylether, stark verbessert.

Der Einsatz des erfindungsgemäßen Verfahrens ist für un-, nieder- und hochlegierte Stähle, für Nickelbasiswerkstoffe und für Aluminium und Aluminiumlegierungen vorteilhaft. Aber auch für andere Werkstoffe wie beispielsweise Magnesium und Magnesiumlegierungen und Gusseisen kann es verwendet werden.

Die vorliegende Erfindung bietet eine ganze Reihe von Vorteilen, von denen im folgenden nur einige wenige genannt werden können: Der Energieeintrag in den Werkstoff kann z.B. beim Lichtbogenfügen vorteilhaft reduziert werden. Die bei den meisten der genannten Verfahren entstehenden Metalldämpfe werden vermindert, da deren Entstehung durch Einsatz der erfindungsgemäßen Gasmischung gehemmt wird. Es wird eine Reduktion der Schadstoffemissionen der genannten Verfahren erreicht.

## Patentansprüche

1. Verfahren zur industriellen Bearbeitung, bei dem mit Hilfe eines Gasgemisches ein thermisches Spritzen, Schneiden, Fügen, Auftragschweißen und/oder eine Oberflächenbehandlung mittels Lichtbogen, Plasma und/oder Laser vorgenommen wird, wobei das Gasgemisch ein Schutzgas umfasst, welches Kohlendioxid und/oder Sauerstoff und/oder Wasserstoff und/oder Stickstoff sowie zumindest eine inerte Komponente ausgewählt aus der Gruppe von Argon, Helium, Argon-Helium-Gemischen und anderen Edelgasen und deren Gemische sowie Gemische von anderen Edelgasen mit Argon und/oder Helium aufweist, **dadurch gekennzeichnet, dass** das Gasgemisch einen Schutzgaszusatz aufweist, der aus der Gruppe von Ether, mindestens eine Ethergruppe enthaltenden cyclischen Aminen und Mischungen davon ausgewählt ist, wobei das Gasgemisch im Bereich von 0,0001 Vol-% (1 vpm) bis 10 Vol.-% Schutzgaszusatz, bezogen auf das Gasgemisch, enthält.

2. Verfahren zur industriellen Bearbeitung nach Anspruch 1, **dadurch gekennzeichnet, dass** der Schutzgaszusatz aus der Gruppe von Dimethylether, Ethylmethylether, Diethylether und Mischungen davon ausgewählt ist.

3. Verfahren zur industriellen Bearbeitung nach Anspruch 1 oder 2, **dadurch gekennzeichnet, dass** das Gasgemisch im Bereich von 0,001 Vol-% (10 vpm) bis 5 Vol.-%, bevorzugt im Bereich von 0,01 Vol-% (100 vpm) bis 0,1 Vol.-% (1000vpm), besonders bevorzugt im Bereich von 0,0001 Vol.-% (1 vpm) bis kleiner 0,1 Vol.-% (1000 vpm) Schutzgaszusatz, bezogen auf das Gasgemisch, enthält.

4. Verfahren zur industriellen Bearbeitung nach einem der Ansprüche 1 bis 3, **dadurch gekennzeichnet, dass** der Schutzgaszusatz dem Gasgemisch vor Ort zudosiert wird.

5. Verfahren zur industriellen Bearbeitung nach einem der Ansprüche 1 bis 4, **dadurch gekennzeichnet, dass** der Schutzgaszusatz zusammen mit dem Schutzgas in einen Druckbehälter abgefüllt wird.

## Claims

1. Method of industrial processing, in which, with the aid of a gas mixture, a thermal spraying operation, cutting operation, joining operation, build-up welding operation and/or a surface treatment is undertaken by means of a light arc, plasma and/or laser, wherein the gas mixture comprises a protective gas including carbon dioxide and/or oxygen and/or hydrogen and/or nitrogen and at least one inert component selected from the group of argon, helium, argon/helium mixtures and other noble gases and mixtures thereof and mixtures of other noble gases with argon and/or helium, **characterized in that** the gas mixture includes a protective gas additive selected from the group of ethers, cyclic amines containing at least one ether group and mixtures thereof, where the gas mixture contains in the range from 0.0001% by volume (1 vpm) to 10% by volume of protective gas additive, based on the gas mixture.

2. Method of industrial processing according to Claim 1, **characterized in that** the protective gas additive is selected from the group of dimethyl ether, ethyl methyl ether, diethyl ether and mixtures thereof.

3. Method of industrial processing according to Claim 1 or 2, **characterized in that** the gas mixture contains in the range from 0.001% by volume (10 vpm) to 5% by volume, preferably in the range from 0.01% by volume (100 vpm) to 0.1% by volume (1000 vpm), more preferably in the range from 0.0001% by volume (1 vpm) to less than 0.1% by volume (1000 vpm), of protective gas additive, based on the gas mixture.

4. Method of industrial processing according to any of Claims 1 to 3, **characterized in that** the protective gas additive is metered into the gas mixture on site.

5. Method of industrial processing according to any of Claims 1 to 4, **characterized in that** the protective gas additive is dispensed together with the protective gas into a pressure vessel.

## Revendications

1. Procédé pour l'usinage industriel, dans lequel on réalise, à l'aide d'un mélange gazeux, une pulvérisation, une découpe, un assemblage, un soudage par application et/ou un traitement de surface thermiques au moyen d'un arc électrique, d'un plasma et/ou d'un laser, le mélange gazeux comprenant un gaz de protection, qui présente du dioxyde de carbone et/ou de l'oxygène et/ou de l'hydrogène et/ou de l'azote ainsi qu'au moins un composant inerte choisi dans le groupe formé par l'argon, l'hélium, les mélanges argon-hélium et d'autres gaz nobles et leurs mélanges ainsi que des mélanges d'autres gaz nobles avec de l'argon et/ou de l'hélium, **caractérisé en ce que** le mélange gazeux présente un ajout de gaz de protection qui est choisi dans le groupe formé par les éthers, les aminés cycliques contenant au moins un groupe éther et leurs mélanges, le mélange gazeux contenant dans la plage de 0,0001% en volume (1 vpm) à 10% en volume d'ajout de gaz de protection, par rapport au mélange gazeux.

2. Procédé pour l'usinage industriel selon la revendication 1, **caractérisé en ce que** l'ajout de gaz de protection est choisi dans le groupe formé par le diméthyléther, l'éthylméthyléther, le diéthyléther et leurs mélanges.

3. Procédé pour l'usinage industriel selon la revendication 1 ou 2, **caractérisé en ce que** le mélange gazeux contient dans la plage de 0,001% en volume (10 vpm) à 5% en volume, de préférence dans la plage de 0,01% en volume (100 vpm) à 0,1% en volume (1000 vpm), de manière particulièrement préférée dans la plage de 0,0001% en volume (1 vpm) à moins de 0,1% en volume (1000 vpm) d'ajout de gaz de protection, par rapport au mélange gazeux.

4. Procédé pour l'usinage industriel selon l'une quelconque des revendications 1 à 3, **caractérisé en ce que** l'ajout de gaz de protection est dosé sur site dans le mélange gazeux.

5. Procédé pour l'usinage industriel selon l'une quelconque des revendications 1 à 4, **caractérisé en ce que** l'ajout de gaz de protection est transféré conjointement avec le gaz de protection dans un récipient sous pression.
